# EUROPEAN PATENT APPLICATION

(11) **EP 3 461 577 A1**
(43) Date of publication of application: **03.04.2019**
(21) Application number: 18193422.5
(22) Date of filing: 10.09.2018
(51) Int. Cl.: B23B 27/04, B23B 27/14, B23B 29/04

(54) **CUTTING TOOL**

(30) Priority: 28.09.2017 JP 2017188012
(71) Applicant: Tungaloy Corporation, Iwaki-shi Fukushima 970-1144 (JP)
(72) Inventor: SAGARA,, Katsuhiro, Iwaki-shi, Fukushima 970-1144 (JP)
(74) Representative: Vossius & Partner Patentanwälte Rechtsanwälte mbB

(57) **Abstract**

A cutting tool which allows for fracture resistance and cutting resistance to be improved at the same time is provided. A cutting tool according to the present invention is a cutting tool 1 comprising an end surface 10, first and second side surfaces 13, 14 which intersect with the end surface 10, a first cutting edge 20a in an intersecting edge between the end surface 10 and the first side surface 13, and a second cutting edge 20b in an intersecting edge between the end surface 10 and the second side surface 14, wherein: the first cutting edge 20a has a first honing surface 21a; and the second cutting edge 20b has a second honing surface 21b. A cross-sectional shape of the second honing surface 21b is different from a cross-sectional shape of the first honing surface 21a.

## Description

### Technical Field

The present invention relates to a cutting tool used in cutting.

### Background Art

A cutting tool for cutting may be provided with a honing surface in a cutting edge in order to strengthen the cutting edge. The size of the honing surface may be varied according to the cutting edge portion. For example, in the throwaway chip disclosed in Patent Document 1, a honing surface is machined in a cutting edge, and such honing surface is formed so as to involve different amounts of honing W (widths on the upper surface side) between a portion thereof near a corner R and a center portion thereof.

### Citation List

### Patent Documents

Patent Document 1: JPH09-019819 A

### Summary

### Technical Problem

The fracture resistance and cutting resistance of a cutting tool can be improved simultaneously by, as in the throwaway chip of Patent Document 1, varying the dimensions of a honing surface according to the cutting edge portion. The present invention provides a cutting tool which allows the fracture resistance and cutting resistance to be further improved with good balance.

### Solution to Problem

A cutting insert according to the present invention is a cutting tool comprising an end surface, first and second side surfaces which intersect with the end surface, a first cutting edge in an intersecting edge between the end surface and the first side surface, and a second cutting edge in an intersecting edge between the end surface and the second side surface, wherein: the first cutting edge has a first honing surface; and the second cutting edge has a second honing surface. A cross-sectional shape of the second honing surface is different from a cross-sectional shape of the first honing surface.

A cutting tool according to another aspect of the present invention can be used for grooving. The cutting tool comprises: a rake surface; a first flank; a front cutting edge which is formed in an intersecting edge between the rake surface and the first flank and which is capable of machining a bottom surface of a groove; a second flank; and a second cutting edge which is formed in an intersecting edge between the rake surface and the second flank and which is capable of machining a first wall surface of the groove, wherein: a first honing surface is formed in the front cutting edge; a second honing surface is formed in the second cutting edge; when, in a cross-section perpendicular to the front cutting edge, defining a width of an area where the first honing surface is formed which is viewed from a direction facing the rake surface as a first width, and defining a height of the area where the first honing surface is formed which is viewed from a direction facing the first flank as a first height, and when, in a cross-section perpendicular to the second cutting edge, defining a width of an area where the second honing surface is formed which is viewed from the direction facing the rake surface as a second width, and defining a height of the area where the second honing surface is formed which is viewed from a direction facing the second flank as a second height, a ratio of the second height to the second width is smaller than a ratio of the first height to the first width; and the second width is greater than the second height.

In this cutting tool, the first honing surface is formed in the front cutting edge which is capable of machining a bottom surface of a groove. Further, the second honing surface is formed in the second cutting edge which is capable of machining a wall surface of the groove. While, in general, honing surfaces having the same shape are typically formed regardless of the cutting edges, the first honing surface and the second honing surface are intentionally made to have different shapes. A special manufacturing process is required in order to form such honing surfaces, and the fracture resistance and the cutting resistance can be improved with good balance in accordance with the roles of the respective cutting edges. In particular, the second surface is formed such that the second width is greater than the second height. This makes it possible to increase the width on the rake surface side so as to ensure the fracture resistance of the second cutting edge and to suppress the height on the flank side so as to suppress degradation of the cutting ability.

Further, the ratio of the second height to the second width is smaller than the ratio of the first height to the first width, and this means that the first honing surface involves a height-to-width ratio at a value closer to 1 than the second honing surface. Thus, the fracture resistance of the front cutting edge can be further improved compared to that of the second cutting edge. Herein, the first width may be configured so as to be greater than the first height.

It should be noted that neither the first honing surface nor the second honing surface needs to be formed throughout each cutting edge, and for instance, a honing surface which satisfies the above-described conditions may be formed in at least half the area of each cutting edge.

An area where a honing surface is formed refers to an area defined by a boundary with respect to a surface which functions as a rake surface or a flank. In the case of chamfer honing in which a honing surface in a cross-section has a substantially linear shape, a boundary of a honing surface with a rake surface (or a flank) can be considered to appear more clearly. In the case of round honing, a honing surface involves variations in the curvature, and thus, a person skilled in the art will be able to recognize a boundary with a rake surface (or a flank). In a case where a honing surface is formed in an elliptical shape, the curvature varies at a boundary with a rake surface (or a flank), and thus, a person skilled in the art will also be able to recognize such boundary.

Herein, the first width may be greater than the second width.

With such configuration, the fracture resistance of the front cutting edge is improved while the cutting ability of the second cutting edge can be enhanced.

Further, in the cross-section perpendicular to the front cutting edge, the first honing surface may have a circular-arc shape.

With such configuration, the fracture resistance of the front cutting edge can be further improved.

Further, in the cross-section perpendicular to the second cutting edge, the second honing surface may have an elliptical shape.

With such configuration, the second height is suppressed, thereby making it possible to suppress degradation of the cutting ability.

Herein, an elliptical shape encompasses not only an elliptic circular arc but also multiple arcs with different curvatures, as well as a curve close to an ellipse, i.e., a curve wherein the sums comprising the distances between the two focuses and any point on the curve are substantially equal to one another. Such multiple circular arcs with different curvatures allow for the exertion of the effect of being manufactured more easily than an ellipse.

Further, the first rake angle of the rake surface connected to the front cutting edge may be greater than the second rake angle of the rake surface connected to the second cutting edge.

A greater rake angle further improves cutting ability, and thus, degradation of the cutting ability of the front cutting edge which is accompanied by honing can be further suppressed by employing a greater rake angle. The front cutting edge is used for the machining of a bottom surface, etc., of a groove and is therefore applied with more resistance, and thus, fracture resistance needs to be secured for the front cutting edge, whereas the front cutting edge is required to avoid degradation of the cutting ability. Therefore, it is possible to prevent a situation in which the employment of a greater rake angle causes excessive degradation of the cutting ability. Meanwhile, with regard to the second cutting edge whose cutting ability is less likely to be degraded by honing, such second cutting edge is given a rake angle smaller than that of the front cutting edge. Thus, as to the front cutting edge which can be used for the machining of a bottom surface, etc., of a groove and the second cutting edge which can be used for the machining of a side surface, etc., of a groove, the honing surfaces and the flanks are set with good balance, thereby making it possible to provide a more practical cutting tool.

Further, the cutting tool may further comprise: a third flank; and a third cutting edge (20c) which is formed in an intersecting edge between the rake surface and the third flank and which is capable of machining a second wall surface opposing the first wall surface of the groove, wherein: the front cutting edge and the second cutting edge may be connected so as to form an acute angle as viewed from the direction facing the rake surface; and the front cutting edge and the third cutting edge may be connected so as to form an acute angle as viewed from the direction facing the rake surface.

With such configuration, chips, etc., are restrained from being caught in between the second (or third) cutting edge and the wall surface, and the wall surface of a groove can be preferably machined using a portion near a connecting part with the front cutting edge.

Further, a third honing surface is formed in the third cutting edge, and, when, in a cross-section perpendicular to the third cutting edge, defining a width of an area where the third honing surface is formed which is viewed from the direction facing the rake surface as a third width, and defining a height of the area where the third honing surface is formed which is viewed from a direction facing the third flank as a third height, a ratio of the third height to the third width may be smaller than a ratio of the first height to the first width.

With such configuration, in the third cutting edge as well, the fracture resistance on the rake surface side is ensured while the third height is suppressed, thereby making it possible to suppress degradation of the cutting ability.

Furthermore, the cutting tool may be used for parting.

### Advantageous Effects of Invention

### Brief Description of Drawings

Fig. 1 is a perspective view of a cutting tool (cutting insert) according to an embodiment of the present invention.
Fig. 2 is a partially enlarged perspective view of the cutting tool of Fig. 1.
Fig. 3 is a partially enlarged plan view of the cutting tool of Fig. 1.
Fig. 4 is an enlarged cross-sectional view taken along a IV-IV cross-section of Fig. 3.
Fig. 5 is an enlarged cross-sectional view taken along a V-V cross-section of Fig. 3.
Fig. 6 is a plan view of the cutting tool of Fig. 1.
Fig. 7 is a right side view of the cutting tool of Fig. 1.
Fig. 8 is a perspective view in a state in which the cutting tool of Fig. 1 is mounted on a holder.
Fig. 9 shows an example of another shape in an enlarged cross-sectional view.

### Description of Embodiments

Preferred embodiments of the present invention will hereinafter be described with reference to the drawings. It should be noted that the same elements are denoted by the same symbols and will not be further explained. Unless otherwise specified, positional relationships, such as vertical and horizontal relationships, are based on the positional relationships shown in the drawings. Further, the dimensional ratios of the drawings are not limited to those shown therein. Furthermore, the embodiments set forth below are illustrative in order to describe the present invention, and the present invention is not limited to the above embodiments.

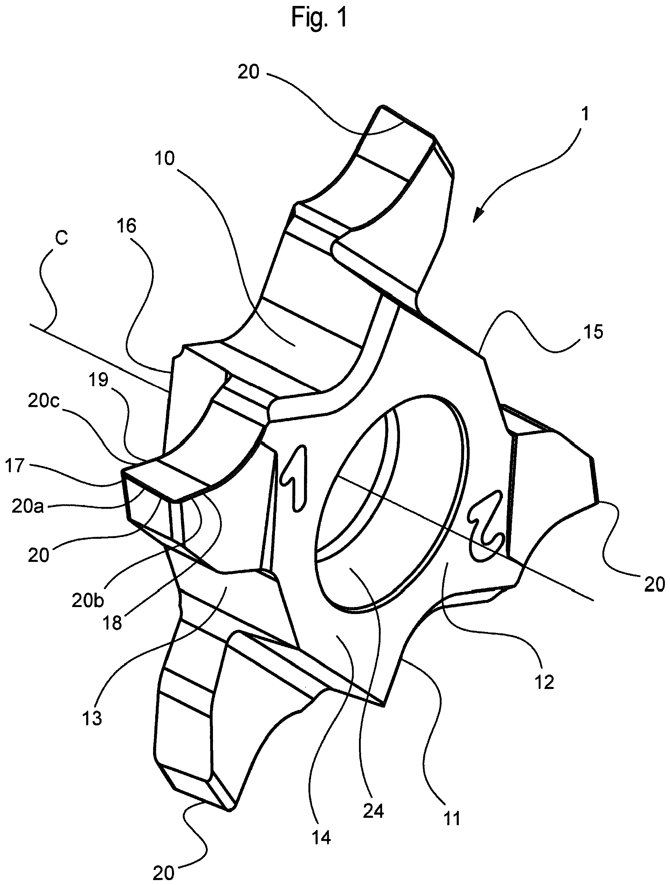

Fig. 1 is a perspective view showing a cutting tool 1 according to an embodiment of the present invention. Herein, a cutting insert is referred to as the cutting tool 1. However, a cutting insert and a holder 2 on which the cutting insert is removably mounted may be collectively referred to as the cutting tool 1. In the description below, a cutting insert is referred to as the cutting tool 1, just by way of example.

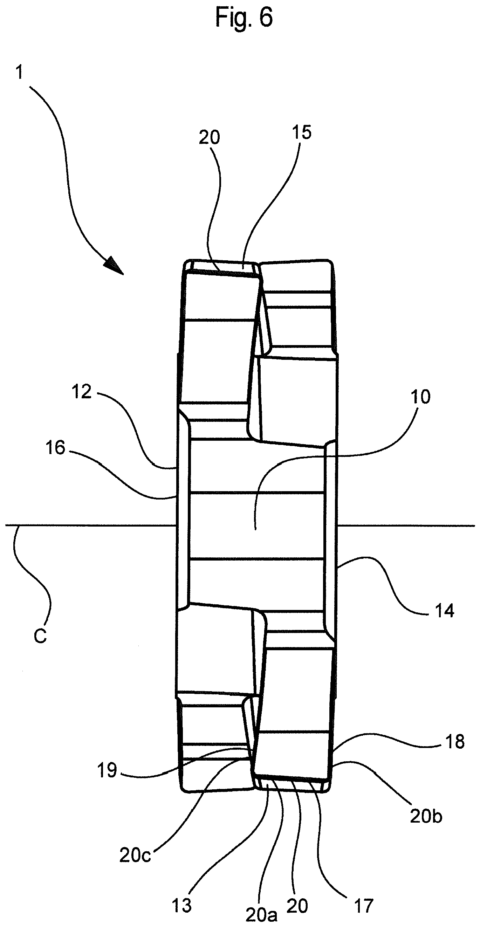

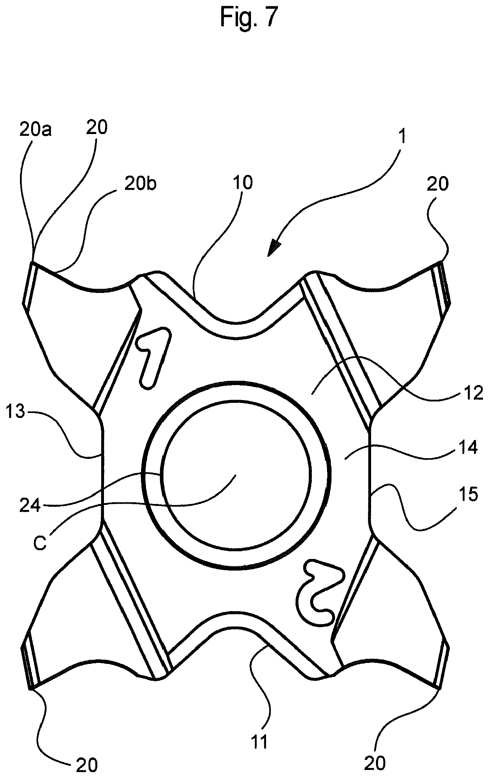

As shown in Figs. 1 and 6, the cutting tool 1 has a first end surface 10 having a substantially polygonal shape. The first end surface can be seen to have a substantially long rectangular shape. The cutting tool 1 further has a second end surface 11 opposing the first end surface 10. Herein, the first end surface 10 is referred to as an upper surface, and the second end surface 11 is referred to as a lower surface. As shown in Figs. 1 and 7, the cutting tool 1 has a peripheral side surface 12 which connects the upper surface 10 and the lower surface 11. As shown in Fig. 6, the peripheral side surface 12 has four side surface portions, i.e., first through fourth side surfaces 13, 14, 15, 16, in this order. Herein, the first side surface 13 side is referred to as a front side. The cutting tool 1 has cutting edges 20 in an intersecting edge between the upper surface 10 and the peripheral side surface 12. The cutting tool 1 also has cutting edges 20 in an intersecting edge between the lower surface 11 and the peripheral side surface 12. The cutting tool 1 has a hole 24 which penetrates the second side surface 14 and the fourth side surface 16. It should be noted that the second and fourth side surfaces 14, 16 respectively have wider areas than those of the upper surface 10 and the lower surface 11.

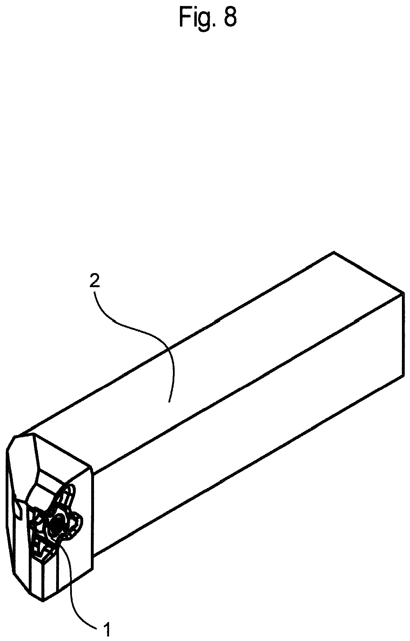

As shown in Fig. 8, the cutting tool 1 can be mounted on the holder 2 which, for example, is long in one direction and has a square pole shape. A clamping member, such as a fastening screw, is used to fasten the hole 24, so that the cutting tool 1 can be fixed to the holder 2. In the cutting tool 1, for example, the upper surface 10, the lower surface 11 and the fourth side surface 16 come into contact with an insert seat of the holder 2. When fastening the hole 24 of the cutting tool 1 with a fastening screw, the configuration may be such that the hole 24 includes an enlarged diameter part toward the second side surface 14. That is, the configuration may be such that: a shank of the fastening screw can pass through a minimum diameter part of the hole 24; and a head of the fastening screw comes into contact with the enlarged diameter part of the hole 24.

The cutting tool 1 according to the present embodiment has a shape of 180-degree rotational symmetry around a central axis C of the hole 24. At the same time, the cutting tool 1 has a shape of 180-degree rotational symmetry around a central axis (not shown) of the upper surface 10 which is orthogonal to the central axis C. Thus, the cutting tool 1 has four sets of cutting edges 20 and a shape in which the sets of cutting edges 20 constitute 180-degree rotational symmetries. Therefore, the description below will be made, centering on one set of a cutting edge 20, and, since the same applies to the other three sets of cutting edges 20, the description thereof will be omitted here. The same also applies to the peripheral shapes other than the cutting edges 20. It should be noted, however, that, as shown in Figs. 1 and 7, marks, such as numerals including 1 and 2, may be indicated on the cutting tool 1 so as to serve as guides for the order in which corners are used. Such marks are permitted to be asymmetrical.

As shown in Figs. 1 and 6, a first edge 17 is formed between the upper surface 10 and the first side surface 13, and the first edge 17 includes a first cutting edge 20a. Herein, the first cutting edge 20a is referred to as a front cutting edge. Further, a second edge 18 is formed between the upper surface 10 and the second side surface 14, and a third edge 19 is formed between the upper surface 10 and the fourth side surface 16. The second edge 18 includes a second cutting edge 20b serving as another cutting edge. The second cutting edge 20b makes an acute interior angle relative to the first cutting edge 20a as viewed from a direction facing the upper surface 10 (in a plan view). The third edge 19 includes a third cutting edge 20c serving as still another cutting edge. The third cutting edge 20c makes an acute interior angle relative to the first cutting edge 20a as viewed from the direction facing the upper surface 10. A first corner cutting edge 20d is arranged between the first cutting edge 20a and the second cutting edge 20b. That is, the second cutting edge 20b is connected to the first cutting edge 20a via the first corner cutting edge 20d. A second corner cutting edge 20e is arranged between the first cutting edge 20a and the third cutting edge 20c. That is, the third cutting edge 20c is connected to the first cutting edge 20a via the second corner cutting edge 20e. These first through third cutting edges 20a, 20b, 20c, and the first corner cutting edge 20d and the second corner cutting edge 20e, i.e., five cutting edge portions, constitute one set of a cutting edge 20. The length of the first cutting edge 20a is, for example, approximately 2 mm, the length of the second cutting edge 20b is, for example, approximately 5 mm, and the length of the third cutting edge 20c is, for example, approximately 5 mm. As viewed from the direction facing the upper surface 10, each of the first and second corner cutting edges 20d, 20e has a substantially circular-arc shape, and the curvature radius is, for example, approximately 0.4 mm. It should be noted that the first and second corner cutting edges 20d, 20e may each be configured to have a circular-arc shape with respect to a workpiece when the cutting tool 1 is mounted on the holder 2. When the cutting tool 1 is mounted on the holder 2, the circumscribed dimension from the first corner cutting edge 20d to the second corner cutting edge 20e, which corresponds to the width of a groove to be machined, is approximately 3 mm.

The dimension from the second side surface 14 of the cutting tool 1 to the fourth side surface 16 thereof is, for example, approximately 4 mm when being represented based on the distance (not shown) between two parallel planes which circumscribe the cutting tool 1. The dimension from the first side surface 13 of the cutting tool 1 to the third side surface 15 thereof is, for example, approximately 13 mm when being represented based on the distance (not shown) between two parallel planes which circumscribe the cutting tool 1. The dimension from the upper surface 10 of the cutting tool 1 to the lower surface 11 thereof is, for example, approximately 13 mm when being represented based on the distance (not shown) between two parallel planes which circumscribe the cutting tool 1. The diameter of the hole 24 is, for example, approximately 5 mm.

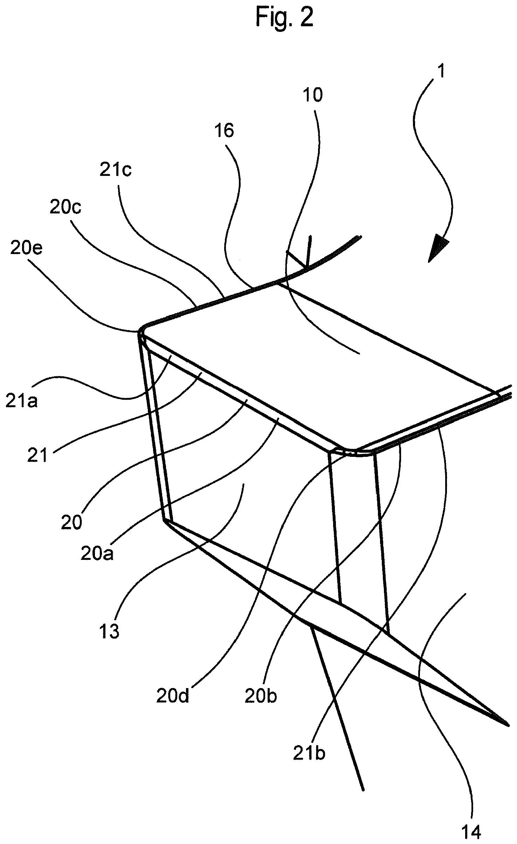

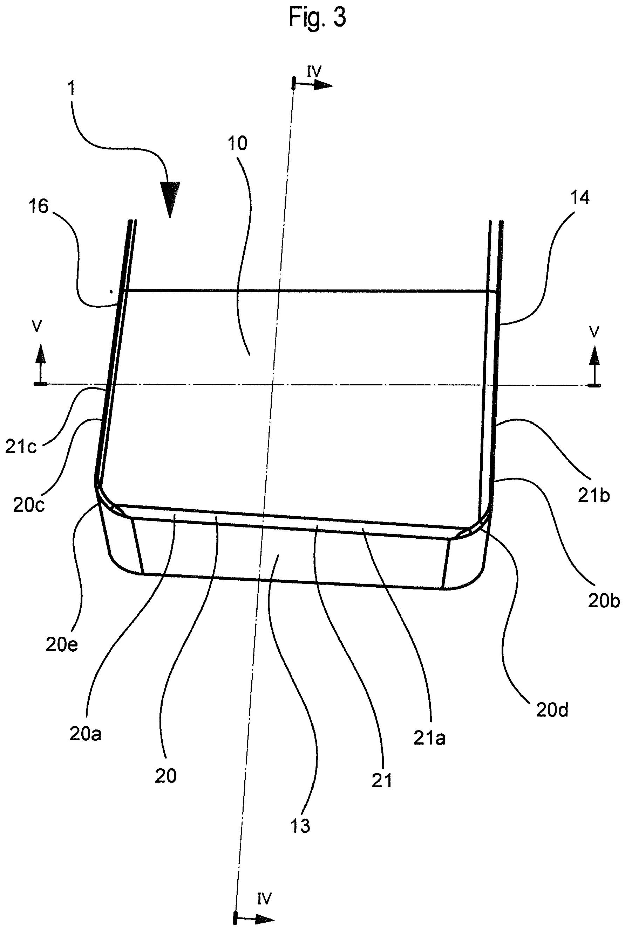

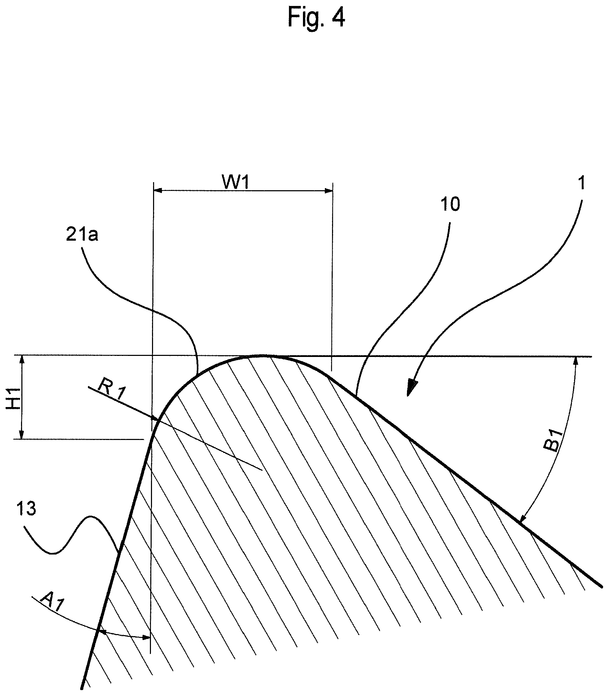

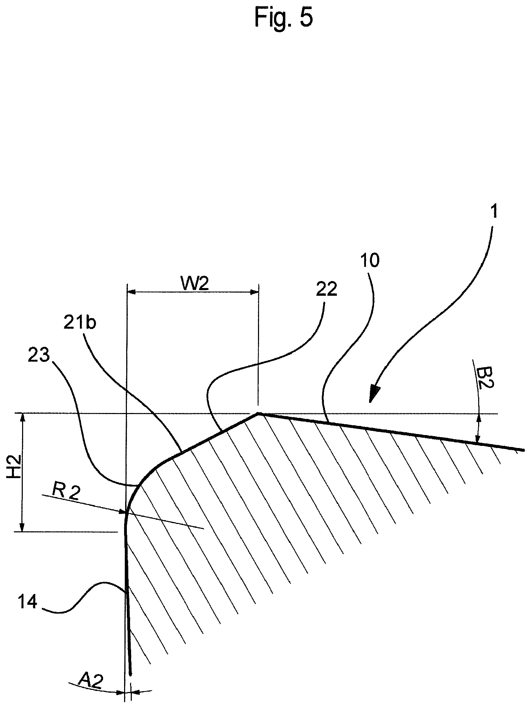

As shown in Figs. 2 and 3, the cutting edge 20 is provided with honing surfaces 21. The first cutting edge 20a has a first honing surface 21a, and the second cutting edge 20b has a second honing surface 21b. Fig. 4 shows a cross-sectional shape of the first honing surface 21a in a IV-IV cross-section of Fig. 3. That is, Fig. 4 shows a cross-sectional shape of the first honing surface 21a in the IV-IV cross-section, which is orthogonal to the first cutting edge 20a and is also orthogonal to the upper surface 10. The cross-sectional shape of the first honing surface 21a is a substantially circular-arc shape with a curvature radius R1 of approximately 0.03 mm. Fig. 5 shows a cross-sectional shape of the second honing surface 21b in a V-V cross-section of Fig. 3. That is, Fig. 5 shows a cross-sectional shape of the second honing surface 21b in the V-V cross-section which is orthogonal to the second cutting edge 20b and is also orthogonal to the upper surface 10. The cross-sectional shape of the second honing surface 21b is a combined shape of one linear portion 22 and one circular-arc portion 23. The circular-arc portion 23 smoothly connects the linear portion 22 and the second side surface 14. When regarding the curvature radius of the circular-arc portion 23 as being denoted by a second curvature radius R2, the second curvature radius R2 is approximately 0.02 mm. It should be noted that, in the cutting tool 1 according to the present embodiment, when viewing the upper surface 10 and the lower surface 11 in their entireties, since the upper surface 10 and the lower surface 11 are parallel to each other, the IV-IV cross-section and the V-V cross-section, which are orthogonal to the upper surface 10, are also orthogonal to the lower surface 11. That is, the IV-IV cross-section and the V-V cross-section, which are represented as having linear shapes in a plan view, are also represented as having linear shapes in a bottom view.

As shown in Fig. 4, the maximum height of the first honing surface 21a as viewed from a direction facing the first side surface 13 is regarded as being denoted by a first height H1. As shown in Fig. 5, the maximum height of the second honing surface 21b as viewed from a direction facing the second side surface 14 is regarded as being denoted by a second height H2. In the cutting tool 1 according to the present embodiment, the first height H1 is approximately 0.03 mm, and the second height H2 is approximately 0.025 mm. That is, the second height H2 is approximately 83% of the first height H1. It should be noted that, in the cutting tool 1 according to the present embodiment, the first honing surface 21a has a constant height, but the height is not limited thereto. The first honing surface 21a may have a variable height. Therefore, the first height H1 is regarded as being the maximum height of the first honing surface 21a. Similarly, in the cutting tool 1 according to the present embodiment, the second honing surface 21b has a constant height, but the height is not limited thereto. The second honing surface 21b may have a variable height. Therefore, the second height H2 is regarded as being the maximum height of the second honing surface 21b.

As shown in Fig. 4, the maximum width of the first honing surface 21a as viewed from the direction facing the upper surface 10 is regarded as being denoted by a first width W1. As shown in Fig. 5, the maximum width of the second honing surface 21b as viewed from the direction facing the upper surface 10 is regarded as being denoted by a second width W2. In the cutting tool 1 according to the present embodiment, the first width W1 is approximately 0.03 mm, and the second width W2 is approximately 0.05 mm. That is, the second width W2 is approximately 167% of the first width W1. It should be noted that, in the cutting tool 1 according to the present embodiment, the first honing surface 21a has a constant width, but the height is not limited thereto. The first honing surface 21 may have a variable width. Therefore, the first width W1 is regarded as being the maximum width of the first honing surface 21a. Similarly, in the cutting tool 1 according to the present embodiment, the second honing surface 21b has a constant width, but the height is not limited thereto. The second honing surface 21b may have a variable width. Therefore, the second width W2 is regarded as being the maximum width of the second honing surface 21b.

A portion of the peripheral side surface 12 which is connected to the cutting edge 20 functions as a flank. As shown in Fig. 4, a clearance angle, with regard to the cutting tool 1 alone, of a portion of the first side surface 13 which is connected to the first cutting edge 20a is regarded as being denoted by a first clearance angle A1. The first clearance angle A1 is based on a direction perpendicular to the upper surface 10, such direction being the vertical direction in Fig. 4, and is regarded as being a positive clearance angle when such portion of the first side surface 13 is directed inward of the cutting tool 1, heading from the upper surface 10 toward the lower surface 11. Therefore, the first clearance angle A1 of the cutting tool 1 according to the present embodiment is a negative clearance angle. The first clearance angle A1 is approximately -10°. As shown in Fig. 5, a clearance angle, with regard to the cutting tool 1 alone, of a portion of the second side surface 14 which is connected to the second cutting edge 20b is regarded as being denoted by a second clearance angle A2. The second clearance angle A2 is based on a direction perpendicular to the upper surface 10, such direction being the vertical direction of Fig. 5, and is regarded as being a positive clearance angle when such portion of the second side surface 14 is directed inward of the cutting tool 1, heading from the upper surface 10 toward the lower surface 11. Therefore, the second clearance angle A2 of the cutting tool 1 according to the present embodiment is a positive clearance angle. The second clearance angle A2 is approximately 2°. It should be noted that, since the lower surface 11 of the cutting tool 1 according to the present embodiment is parallel to the upper surface 10, the reference direction perpendicular to the upper surface 10 is also perpendicular to the lower surface 11.

The cutting tool 1 has a chip breaker in the upper surface 10. A portion of the upper surface 10 which is connected to the cutting edge 20 functions as a rake surface. As shown in Fig. 4, a rake angle, with regard to the cutting tool 1 alone, of a portion of the upper surface 10 which is connected to the first cutting edge 20a is regarded as being denoted by a first rake angle B1. The first rake angle B1 is based on a direction parallel to the upper surface 10, such direction being the horizontal direction of Fig. 4, and is regarded as being a positive rake angle when such portion of the upper surface 10 approaches the lower surface 11 as it heads away from the cutting edge 20. Therefore, the first rake angle B1 of the cutting tool 1 according to the present embodiment is a positive rake angle. The first rake angle B1 is approximately 27°. As shown in Fig. 5, a rake angle, with regard to the cutting tool 1 alone, of a portion of the upper surface 10 which is connected to the second cutting edge 20b is regarded as being denoted by a second rake angle B2. The second rake angle B2 is based on a direction parallel to the upper surface 10, such direction being the horizontal direction of Fig. 5, and is regarded as being a positive rake angle when such portion of the upper surface 10 approaches the lower surface 11 as it heads away from the cutting edge 20. It should be noted, however, that, Fig. 5 illustrates such angle in an exaggerated manner for the facilitation of understanding the second rake angle B2. The actual second rake angle B2 of the cutting tool 1 according to the present embodiment is approximately 0°. It should be noted that, in the cutting tool 1 according to the present embodiment, since the lower surface 11 is parallel to the upper surface 10, the reference direction parallel to the upper surface 10 is also parallel to the lower surface 11.

As shown in Figs. 3 and 6, as viewed from the direction facing the upper surface 10, a direction in which the first cutting edge 20a extends is not perpendicular to a direction in which the second side surface 14 extends (longitudinal direction). That is, in Fig. 3, a part of the first cutting edge 20a which is closer to the first corner cutting edge 20d protrudes further outward than a part thereof which is closer to the second corner cutting edge 20e. The first cutting edge 20a extends in a direction at an interior angle of approximately 86° with respect to the direction in which the second side surface 14 extends.

Materials used for the cutting edges 20 of the cutting tool 1 and their peripheral areas are not particularly limited, but may be selected, for example, from among: hard materials, such as cemented carbide, cermet, ceramic and a sintered body containing cubic boron nitride; materials obtained by applying a PVD or CVD coating to the surface of such hard materials; and mono-crystalline diamond and a sintered body containing diamond.

### [Second embodiment]

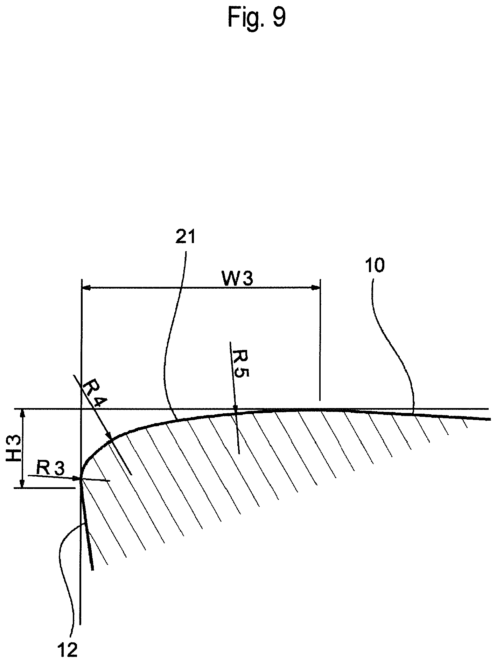

The present embodiment describes a cutting tool suited for grooving or parting. The experiments conducted by the inventor, etc., of the present application and the accompanying consideration have found that the fracture resistance of a cutting edge is greatly affected by a honing width on the rake surface side and that the cutting ability thereof is greatly affected by a honing height on the flank side. It has also been found that fracture resistance can be maintained while the degradation of the cutting ability can be suppressed by achieving a large honing width on the rake surface side and a small honing height on the flank side. More specifically, it has been made clear that the balance between the cutting ability and the degree of resistance to chipping is suitably improved by using, for grooving, the combination of the following two types of employment: the configuration shown in Fig. 4 is employed for the honing surface 21a of the front cutting edge 20a; and the configuration shown in Fig. 9 is employed for each of the respective honing surfaces 21b and 21c of the second cutting edge 20b and third cutting edge 20c.

As shown in Fig. 9, when regarding a width of an area where the honing surface 21 is formed which is viewed from the direction facing the rake surface 10 as being denoted by W3, and also regarding a height of the area where the honing surface 21 is formed which is viewed from a direction facing the peripheral side surface 12 (the flanks 14 and 16) as being denoted by H3, each of the respective honing surfaces 21 b and 21c of the second cutting edge 20b and third cutting edge 20c is formed so as to satisfy W3 > H3.

In the case of grooving, the cutting resistance applied on the second cutting edge 20b and the third cutting edge 20c for inner-wall machining is smaller than the cutting resistance applied on the front cutting edge 20a for the machining of a bottom surface of a groove. This allows for honing surfaces to be formed with greater importance being placed on the cutting ability than that involved in the honing surface provided in the front cutting edge 20a, thereby making it possible to avoid circumstances where, although the front cutting edge 20a is still sufficiently usable, the second cutting edge 20b and the third cutting edge 20c fracture and become unusable.

It should be noted, however, that, since a sharp edge leads to the frequent occurrence of chipping, chipping can be suppressed while the cutting ability can be preferably improved by making W3 (a honing width provided on the rake surface 10 side) be greater than H3 (a honing height provided on the flank 12 side).

The ratio between W3 and H3 should be determined in accordance with, for example, the material of a workpiece, the depth of a groove, and the length of the front cutting edge 20a. However, in general, the cutting ability can be further improved by forming the honing surfaces 21b and 21c in order for W3 to be greater than three times H3.

Herein, contours of the honing surfaces 21 b and 21c in a cross-section are each formed in an elliptical shape, as shown in Fig. 9, that is, the contours are formed such that: parts of the honing surfaces 21b and 21c, each of such parts having a high curvature, face toward the rake surface 10; and parts of the honing surfaces 21b and 21c, each of such parts having a low curvature, respectively face toward the flanks 14 and 16.

Meanwhile, if the honing surface provided in the front cutting edge 20a does not involve greater importance being placed on fracture resistance, this may invite circumstances where, when performing grooving, although the second cutting edge 20b and the third cutting edge 20c are still sufficiently usable, the front cutting edge 20a fractures and becomes unusable.

In order to prevent the above problem, as shown in Fig. 4, the honing surface 21a of the front cutting edge 20a is formed such that the ratio of H1, being a height of an area where the honing surface 21a is formed, such honing surface 21 being viewed from the direction facing the flank 13, to W1, being a width of the area where the honing surface 21a is formed, such honing surface 21a being viewed from the direction facing the rake surface 10, is greater than the ratio of H3 to W3.

The ratio between W1 and H1 should be determined in accordance with, for example, the material of a workpiece, the depth of a groove, and the length of the front cutting edge 20a. However, in general, fracture resistance can be further improved by forming the honing surface 21 in order for W1 to be smaller than three times H1.

Herein, the honing surface 21a is formed such that, as shown in Fig. 4, the contour of the honing surface 21a in a cross-section has a circular-arc shape with a constant curvature.

It should be noted that the magnitude relationship between a width and a height covers such magnitude relationship which is intentionally established and thus does not encompass circumstances where such magnitude relationship is incidentally achieved, in part of a side-surface cutting edge, due to manufacturing variations, etc., in the manufacturing process. The ratio between a width and a height also covers such ratio which is intentionally established and does not encompass circumstances where an area involving such ratio locally exists without intention.

The cutting tool (cutting insert) 1 configured as described above can be manufactured as set forth below. Firstly, an outer shape of the cutting tool 1 is molded by press-molding a material and sintering the resulting product. Thereafter, the resulting product is subjected to grinding, etc., if necessary. At this time, the honing surfaces 21 are formed. The honing surfaces 21 can be formed by a machining method with a grinding stone and various known methods, such as a machining method with a brush, a machining method with free grains, a machining method with a rubber grinding stone and a machining method with laser beams. The shape of each of the honing surfaces 21 can be adjusted by adjusting the machining conditions in accordance with the machined portion of the cutting edge 20. For example, in the case of a machining method with free grains, the cross-sectional shape and dimensions of the honing surface 21 can be adjusted by varying the angle of a nozzle which ejects free grains and the ejection pressure thereof. When free grains are caused to hit substantially uniformly on an end surface and a side surface from a direction orthogonal to a cutting edge portion, a honing surface 21 having a substantially circular-arc cross-sectional shape can be obtained, by way of example. Here, when the angle of the nozzle is changed such that free grains hit strongly on the end surface 10 side and hit weakly on the peripheral side surface 12 side, a honing surface 21 having a combined (substantially elliptical) cross-sectional shape of multiple circular arcs can be obtained, by way of example. A direction in which the angle of the nozzle is changed is not limited to the vertical direction, and the cross-sectional shape can be adjusted also by adjusting the in-plane angle in a front direction of the cutting edge portion. It should be noted that the cutting tool 1 of the present embodiment can be obtained by the machining process set forth below. Firstly, the second cutting edge 20b is machined by, for example, a machining method with a grinding stone, so as to be provided with a honing surface having a substantially linear cross-sectional shape. Next, using, for example, a machining method with free grains, the first honing surface 21a is machined in a direction orthogonal to the first cutting edge 20a, and a portion of the second honing surface 21b which has a substantially circular-arc cross-sectional shape is machined in an oblique direction in a plane with respect to the second cutting edge 20b. The first honing surface 21a and the second honing surface 21b may be machined simultaneously. Alternatively, the first honing surface 21a and the second honing surface 21b may be machined separately. It should be noted that a CVD or PVD coating may be additionally provided, if necessary.

For instance, when forming the honing surface 21a, free grains are ejected in a direction which is orthogonal to the front cutting edge 20a and which forms a bisector between the rake surface 10 and the flank 13 in a cross-section orthogonal to the front cutting edge 20a, thereby making it possible to form the honing surface 21a having a circular-arc cross-sectional shape of the front cutting edge 20a.

With regard to the honing surfaces 21b and 21c, free grains are ejected in directions closer to normals of the flanks 14 and 16 so as to form parts of the honing surfaces 21b and 21c each having a cross-section with a predetermined curvature, and the ejection angle is then shifted such that free grains are ejected in a direction close to a normal of the rake surface 10, thereby making it possible to form the honing surfaces 21b and 21c each involving a large amount of honing on the rake surface 10 side and also having a high curvature.

The cutting tool 1 is attached to the holder 2 by, for example, as shown in Fig. 8, inserting a clamping member into the hole 24 and fastening the cutting tool 1 via the clamping member. It should be noted that such method of fixing the cutting tool 1 is not particularly limited and the cutting tool 1 may be fixed by pressure pieces or wedges. During lathing, a workpiece is fixed to a chuck of a lathe and is then rotated around a horizontal axis. Then, a part of the cutting tool 1 which is closer to the cutting edge 20 is brought close to the workpiece, and the workpiece is then cut by the cutting edge 20. It should be noted that, when being mounted on the holder 2, the cutting tool 1 is arranged in an inclined manner so as to have an appropriate true clearance angle with a portion of the first side surface 13 which functions as a flank. This true clearance angle is preferably approximately 7°, by way of example. That is, since the first clearance angle A1 is approximately -10°, the cutting tool 1 is preferably arranged so as to be inclined at approximately 17°. Further, as viewed from an upper surface of the holder 2, the first cutting edge 20a is preferably arranged so as to be orthogonal to a longitudinal direction of the holder 2. That is, as viewed from the upper surface of the holder 2, the cutting tool 1 is preferably arranged so as to be inclined at approximately 4°.

Next, the operation and effects of the cutting tool 1 according to the present embodiment will be described. Further, preferred embodiments of the present invention will be described below.

The cutting tool 1 is suited for grooving with the use of a lathe. When being used for grooving, the cutting tool 1 may be arranged such that the first cutting edge 20a of one set of a cutting edge 20, from among the four sets of cutting edges 20, acts as a front cutting edge. That is, the cutting tool 1 may be arranged such that the first cutting edge 20a is parallel to a bottom of a groove machined in a workpiece. With such arrangement, the first cutting edge 20a, the first corner cutting edge 20d and the second corner cutting edge 20e determine the width of the groove initially formed. The second and third cutting edges 20b, 20c can be made to act as wiper edges (cutting edges for finishing) for inner wall surfaces of a groove. It should be noted that the second and third cutting edges 20b, 20c can also be made to act as side surface cutting edges for extending the width of a groove. That is, after a groove is formed, the cutting tool 1 is fed in a lateral direction, whereby the width of the groove can be extended. Since the cutting tool 1 has the four sets of cutting edges 20, even when one set of a cutting edge 20 is damaged, the cutting tool 1 can be used at least four times by replacing such set with each of the other three sets of cutting edges 20 and then remounting the cutting tool 1 on the holder 2.

As described above, the first honing surface 21 a of the first cutting edge 20a and the second honing surface 21b of the second cutting edge 20b differ from each other in terms of their cross-sectional shapes. Therefore, it is possible to provide individual shapes of the honing surfaces 21 which are suitable for the cutting characteristics of the respective cutting edge portions. For instance, in grooving, when the first cutting edge 20a serves as a front cutting edge, the first cutting edge 20a is preferably resistant to chipping, since the entire width affects cutting. That is, the first honing surface 21a preferably has a substantially circular-arc cross-sectional shape, which is resistant to chipping. Meanwhile, the second cutting edge 20b, which acts as a wiper edge or a side-surface cutting edge, is required to have cutting ability when, in particular, the quality of a machined surface is enhanced. The cutting ability of the cutting tool 1 can be evaluated according to, for example, the extent to which the cutting resistance is low. Alternatively, the cutting ability may be evaluated in terms of wear resistance. The second honing surface 21b preferably has a substantially linear cross-sectional shape, which provides high cutting ability.

However, the balance between cutting ability and the degree of resistance to chipping is important from a practical viewpoint, and a shape for each of the first and second honing surfaces 21a, 21b may be selected from among intermediate shapes between a substantially circular-arc shape and a substantially linear shape, i.e., a substantially elliptical shape, a combined shape of a plurality of circular arcs, and a combined shape of at least one line and at least one circular arc. It should be noted that the combined shape of a plurality of circular arcs may refer to, for example, the shape shown in Fig. 9. The cross-sectional shape shown in Fig. 9 can be regarded as a combined shape of three circular arcs located from the peripheral side surface 12 side. When regarding, from the peripheral side surface 12 side, the curvature radii of the respective circular-arc portions as third through fifth curvature radii R3, R4, R5, it is preferable for the third curvature radius R3 to be smaller than the fourth curvature radius R4, and it is also preferable for the fourth curvature radius R4 to be smaller than the fifth curvature radius R5. That is, R3 < R4 < R5 is preferably satisfied. However, the shape illustrated in Fig. 9 is merely a shape obtained by approximating three circular arcs, and the number of circular arcs to be approximated may also be two or four or more. Further, the shape of the first and second honing surfaces 21a, 21b does not exclude a shape whose curvature radius varies in a continuous manner. Such shape whose curvature radius varies in a continuous manner may be, for example, a spline curve. The combined shape illustrated in Fig. 9 may be referred to as a substantially elliptical shape. It is preferable for a substantially elliptical shape to be a shape which has a major axis extending in the lateral direction in Fig. 9 and a minor axis extending in the longitudinal direction therein.

Basically, an intermediate shape, such as a substantially elliptical shape, refers to a shape which is more resistant to chipping when such intermediate shape is more similar to a substantially circular-arc shape while referring to a shape with higher cutting ability when such intermediate shape is more similar to a substantially linear shape. It should be noted that, when the cutting ability and the resistance to chipping have good balance and also when the cutting conditions are applied successfully, it may be possible to obtain a shape with resistance to chipping and good cutting ability. That is, basically, the first honing surface 21a of the front cutting edge preferably has a substantially circular-arc cross-sectional shape or a cross-sectional shape which is similar to a substantially circular-arc shape. More specifically, the cross-sectional shape of the first honing surface 21a is preferably selected from among a substantially circular-arc shape, a substantially elliptical shape, a combined shape of a plurality of circular arcs, and a combined shape of at least one line and at least one circular arc. The cross-sectional shape of the second honing surface 21b is preferably comprised of a shape which is more similar to a substantially linear shape than the cross-sectional shape of the first honing surface 21a. More specifically, the cross-sectional shape of the second honing surface 21b is preferably selected from among a substantially linear shape, a combined shape of at least one line and at least one circular arc, a substantially elliptical shape, and a combined shape of a plurality of circular arcs.

However, as to a substantially linear shape, the resistance to chipping and the cutting ability can be adjusted by also adjusting an inclination angle with respect to the upper surface 10. That is, when the inclination angle is increased so as to increase the ratio of the height to the width of the honing surface 21, the honing surface 21 has a shape resistant to chipping; conversely, when the inclination angle is decreased so as to decrease the ratio of the height to width of the honing surface 21, the honing surface 21 has a shape with good cutting ability. Further, as to intermediate shapes, such as a substantially elliptical shape, various shapes under the same category can be achieved through adjustment, ranging from a shape similar to a substantially circular-arc shape to a shape similar to a substantially linear shape. Therefore, in the present invention, the first honing surface 21a and the second honing surface 21b can be made to have different cross-sectional shapes under the same category. In other words, intermediate shapes, such as a substantially elliptical shape, can be considered to be different from one another unless they are similar shapes. That is, it is important in the present invention that the cross-sectional shape of the first honing surface 21a and the cross-sectional shape of the second honing surface 21b are not similar shapes. To put it another way, in terms of the width and height of the honing surface 21, the ratio of the height and width H2/W2 of the second honing surface 21b is preferably smaller than the ratio of the height and width H1/W1 of the first honing surface 21a.

The cross-sectional shape of each of the honing surfaces 21 has been described above, centering on the issue of whether it is close to a substantially circular-arc shape or a substantially linear shape. However, in practice, the magnitudes, etc., of the dimensions, such as the width and height, of the honing surface 21 can be changed, and thus, the applicable combinations involve a higher degree of freedom. For instance, even in the case where: the cross-sectional shape of the first honing surface 21a of the front cutting edge is a combined shape of a line and a circular arc; and the cross-sectional shape of the second honing surface 21b is a substantially circular-arc shape, when the width W2 of the second honing surface 21 b is made to be sufficiently smaller than the width W1 of the first honing surface 21a, it is possible to obtain shapes which respectively result in the first cutting edge 20a with resistance to chipping and the second cutting edge 20b with good cutting ability.

In the cutting tool 1 according to the present embodiment, the peripheral area of the first cutting edge 20a and the peripheral area of the second cutting edge 20b involve different clearance angles and rake angles. That is, the first clearance angle A1 is a negative angle with respect to the second clearance angle A2, and the first rake angle B1 is greater than the second rake angle B2. Damage to the cutting edge 20 and the cutting ability thereof are closely related to the clearance angles and rake angles. When a true clearance angle is appropriately set with respect to a workpiece, the cutting ability is improved by increasing the actual rake angle. Further, various chip breakers may be provided in the upper surface 10. Various chip breakers allow for the adjustment of a rake angle of a portion connected to each cutting edge 20. In the present invention, in addition to the above-described adjustments of clearance angles and rake angles, the honing surfaces can be set independently in accordance with the characteristics required for each cutting edge, and thus, the cutting ability, fracture resistance, etc., can be adjusted appropriately, whereby the cutting performance of the cutting tool 1 can be enhanced. For instance, although the cutting tool 1 according to the present embodiment involves a small angle as the second rake angle B2 of the second cutting edge 20b, the cutting ability can be improved by decreasing the second honing surface 21b.

Although the embodiments of the present invention have been described above, various changes may be made to the cutting tool of the present invention. For instance, in the above-described embodiments, the cross-sectional shape of the first honing surface 21a is a substantially circular-arc shape, and the cross-sectional shape of the second honing surface 21 b is a combined shape of one line and one circular arc; however, such cross-sectional shapes are not limited thereto, as described above. The cutting tool 1 according to the present embodiment is suitable for grooving, but the application is not limited thereto. For instance, the cutting tool 1 is applicable to various cutting tools each having a major cutting edge and a wiper edge. Further, the second cutting edge 20b is not limited to a cutting edge for finishing, such as a wiper cutting edge. The cutting tool 1 is applicable to various cutting edges each having two different cutting edges, i.e., the first cutting edge 20a and the second cutting edge 20b.

The cutting tool of the present invention is not limited to cutting tools in the form of using cutting inserts and is also applicable to cutting tools in the form of brazing chips. Further, the cutting tool of the present invention is not limited to turning tools and is also applicable to other forms of cutting tools, such as rotating tools and hole machining tools.

In the above-described embodiments, the present invention has been described specifically in a given way, but the present invention is not limited thereto. It should be appreciated that various alterations and changes can be made to the present invention without departing from the spirit and scope of the invention defined in the scope of the claims. That is, the present invention covers all kinds of modifications, applications and equivalents which are encompassed by the idea of the present invention defined by the scope of the claims.

### Reference Signs List

- 1: Cutting tool (cutting insert)
- 2: Holder
- 10: First end surface (upper surface)
- 11: Second end surface (lower surface)
- 12: Peripheral side surface
- 13: First side surface
- 14: Second side surface
- 15: Third side surface
- 16: Fourth side surface
- 17: First edge
- 18: Second edge
- 19: Third edge
- 20: Cutting edge
- 20a: First cutting edge (front cutting edge)
- 20b: Second cutting edge
- 20c: Third cutting edge
- 20d: First corner cutting edge
- 20e: Second corner cutting edge
- 21: Honing surface
- 21a: First honing surface
- 21b: Second honing surface
- 21c: Third honing surface
- 22: Linear portion
- 23: Circular-arc portion
- 24: Hole
- A1: First clearance angle
- A2: Second clearance angle
- B1: First rake angle
- B2: Second rake angle
- C: Central axis of the hole
- H1: First height
- H2: Second height
- R1: Curvature radius of the first honing surface
- R2: Second curvature radius
- R3: Third curvature radius
- R4: Fourth curvature radius
- R5: Fifth curvature radius
- W1: First width
- W2: Second width

## Claims

1. A cutting tool (1) comprising an end surface (10), first and second side surfaces (13, 14) which intersect with the end surface (10), a first cutting edge (20a) in an intersecting edge between the end surface (10) and the first side surface (13), and a second cutting edge (20b) in an intersecting edge between the end surface (10) and the second side surface (14),
wherein the first cutting edge (20a) has a first honing surface (21a), the second cutting edge (20b) has a second honing surface (21b), and a cross-sectional shape of the second honing surface (21b) is different from a cross-sectional shape of the first honing surface (21a).

2. The cutting tool according to claim 1, wherein:
the cross-sectional shape of the first honing surface (21a) is a substantially circular-arc shape; and
the cross-sectional shape of the second honing surface (21b) is selected from among a substantially linear shape, a combined shape of at least one line and at least one circular arc, a substantially elliptical shape, and a combined shape of a plurality of circular arcs.

3. The cutting tool according to claim 1, wherein the cross-sectional shape of the first honing surface (21a) is selected from among a substantially elliptical shape, a combined shape of a plurality of circular arcs, and a combined shape of at least one line and at least one circular arc.

4. The cutting tool according to any one of claims 1 to 3, wherein, when defining a direction orthogonal to the end surface (10) as a height direction, defining a maximum height of the first honing surface (21a) which is viewed from a direction facing the first side surface (13) as a first height (H1), and defining a maximum height of the second honing surface (21b) which is viewed from a direction facing the second end surface (14) as a second height (H2), the second height (H2) is smaller than the first height (H1).

5. The cutting tool according to any one of claims 1 to 4, wherein, as viewed from a direction facing the end surface (10), the second cutting edge (20b) makes an acute interior angle relative to the first cutting edge (20a).

6. The cutting tool according to any one of claims 1 to 5, wherein:
the cutting tool (1) is a cutting insert comprising a second end surface (11) opposing the end surface (10), and a peripheral side surface (12) connecting the end surface (10) and the second end surface (11); and
the peripheral side surface (12) includes the first side surface (13) and the second side surface (14).

7. The cutting tool according to any one of claims 1 to 6, wherein:
the cutting tool (1) is a cutting insert for either parting or grooving;
the first cutting edge (20a) is a front cutting edge arranged on a front side; and
the second cutting edge (20b) is connected to the first cutting edge (20a) via a corner cutting edge (20d) having a substantially circular-arc shape.

8. A cutting tool (1) which allows for parting, the cutting tool comprising:
a rake surface (10);
a first flank (13);
a front cutting edge (20a) which is formed in an intersecting edge between the rake surface (10) and the first flank (13) and which is capable of machining a bottom surface of a groove;
a second flank (14); and
a second cutting edge (20b) which is formed in an intersecting edge between the rake surface (10) and the second flank (14) and which is capable of machining a first wall surface of the groove, wherein:
a first honing surface (21a) is formed in the front cutting edge (20a);
a second honing surface (21b) is formed in the second cutting edge (20b);
when, in a cross-section perpendicular to the front cutting edge (20a), defining a width of an area where the first honing surface (21a) is formed which is viewed from a direction facing the rake surface (10) as a first width, and defining a height of the area where the first honing surface (21a) is formed which is viewed from a direction facing the first flank (13) as a first height, and
when, in a cross-section perpendicular to the second cutting edge (20b), defining a width of an area where the second honing surface (21b) is formed which is viewed from the direction facing the rake surface (10) as a second width, and defining a height of the area where the second honing surface (21b) is formed which is viewed from a direction facing the second flank (14) as a second height,
a ratio of the second height to the second width is smaller than a ratio of the first height to the first width; and
the second width is greater than the second height.

9. The cutting tool according to claim 8, wherein the first width is greater than the second width.

10. The cutting tool according to claim 8 or 9, wherein, in the cross-section perpendicular to the front cutting edge (20a), the first honing surface (21a) has a substantially circular-arc shape.

11. The cutting tool according to any one of claims 8 to 10, wherein, in the cross-section perpendicular to the second cutting edge (20b), the second honing surface (21b) has a substantially elliptical shape.

12. The cutting tool according to any one of claims 8 to 11, wherein a first rake angle of the rake surface (10) connected to the front cutting edge (20a) is greater than a second rake angle formed by the second cutting edge (20b) and the rake surface (10).

13. The cutting tool according to any one of claims 8 to 12, further comprising: a third flank (16); and a third cutting edge (20c) which is formed in an intersecting edge between the rake surface (10) and the third flank (16) and which is capable of machining a second wall surface opposing the first wall surface of the groove, wherein:
the front cutting edge (20a) and the second cutting edge (20b) are connected so as to form an acute angle as viewed from the direction facing the rake surface (10); and
the front cutting edge (20a) and the third cutting edge (20c) are connected so as to form an acute angle as viewed from the direction facing the rake surface (10).

14. The cutting tool according to any one of claims 8 to 13, further comprising: a third flank (16); and a third cutting edge (20c) which is formed in an intersecting edge between the rake surface (10) and the third flank (16) and which is capable of machining a second wall surface opposing the first wall surface of the groove, wherein:
a third honing surface (21c) is formed in the third cutting edge (20c); and
when, in a cross-section perpendicular to the third cutting edge (20c), defining a width of an area where the third honing surface (21c) is formed which is viewed from the direction facing the rake surface (10) as a third width, and defining a height of the area where the third honing surface (21c) is formed which is viewed from a direction facing the third flank (16) as a third height,
a ratio of the third height to the third width is smaller than a ratio of the first height to the first width.

15. The cutting tool according to any one of claims 8 to 14, the cutting tool also being used for parting.
